# EUROPÄISCHE PATENTSCHRIFT

(11) **EP 0 963 872 B1**
(45) Veröffentlichungstag und Bekanntmachung des Hinweises auf die Patenterteilung: **29.08.2007**
(21) Anmeldenummer: 99108615.8
(22) Anmeldetag: 10.05.1999
(51) Int. Cl.: B60N 2/42

(54) **Fahrzeugsitz mit begrenzter Rückverlagerung von Sitzkomponenten unter Energieabsorption bei einem Heckaufprall**
Vehicle seat with limited rear displacement of the seat components by energy absorption in case of a rear impact
Siège de véhicule à déplacement arrière limité des éléments de siège par absorption d'énergie en cas de choc arrière

(30) Priorität: 09.06.1998 DE 19825701
(43) Veröffentlichungstag der Anmeldung: 15.12.1999
(73) Patentinhaber: Volkswagen Aktiengesellschaft, 38436 Wolfsburg (DE)
(72) Erfinder: Sinnhuber, Ruprecht Dipl.Ing, 38518 Gifhorn (DE); Wohllebe, Thomas Dipl.ing, 38547 Calberlah (DE); Vogel, Tim-Bosse Dipl.Ing, 89077 Ulm (DE)
(74) Vertreter: Schneider, Henry

(56) Entgegenhaltungen:
- EP-A- 0 556 884
- EP-A- 0 627 340
- WO-A-99/44855
- DE-A- 2 945 060
- DE-A- 3 018 735
- DE-A- 3 900 495
- DE-A- 4 120 608
- DE-A- 19 646 304
- DE-A- 19 647 649
- DE-A- 19 648 974
- DE-C- 4 323 543
- DE-U- 29 601 479
- DE-U- 29 603 467
- DE-U- 29 603 991
- DE-U- 29 609 786
- FR-A- 2 744 961
- FR-A- 2 775 449
- US-A- 3 802 737
- US-A- 4 145 081

## Beschreibung

Die Erfindung betrifft einen Fahrzeugsitz mit einem Sitzteil, einer Rückenlehne und einer mit der Rückenlehne verbundenen Kopfstütze sowie ein Kraftfahrzeug mit einem derartigen Sitz.

Bei Auffahrunfällen, bei denen ein anderes Fahrzeug gegen das Heck eines stehenden oder eines langsamer fahrenden Fahrzeuges prallt, werden die Fahrzeuginsassen in dem vorderen der beteiligten Fahrzeuge infolge ihrer Trägheit in Bezug zum Fahrzeugsitz nach hinten beschleunigt, wobei es insbesondere bei Sitzen ohne Kopfstützen wegen der fehlenden Abstützung des Kopfs zu schweren Verletzungen der Halswirbelsäule (Schleudertrauma) kommen kann. Aus diesem Grunde werden Kraftfahrzeugsitze fast durchgehend mit Kopfstützen ausgerüstet, die darüber hinaus auch bei anderen Unfallsituationen den Kopf des auf dem Fahrzeugsitz sitzenden Fahrzeuginsassen abfangen sollen, zum Beispiel wenn sich dieser bei einem Frontalaufprall im Anschluss an die trägheitsbedingte Vorwärtsbewegung wieder nach hinten bewegt. Da die auf die Kopfstütze ausgeübten Kräfte insbesondere beim Heckaufprall verhältnismäßig hoch sein können, muss die Halterung der Kopfstütze ausreichend steif sein, um eine unerwünschte Verformung beim Aufprall zu verhindern. Die Kopfstützenhalterung besteht daher gewöhnlich aus zwei parallelen Rundstangen aus Stahl, die neben einer hohen Steifigkeit jedoch auch eine hohe Elastizität aufweisen. Entsprechendes gilt für den Stahlrahmen der Rückenlehne, an dem die Halterung gewöhnlich höhenverstellbar befestigt ist. Die Elastizität der Kopfstützenhalterung und der Rückenlehne tragen zwar einerseits dazu bei, den Kopf und den Körper bei seiner Rückwärtsbewegung weicher abzufangen, bewirken jedoch andererseits, dass die Kopfstütze und die Rückenlehne infolge von elastischen Rückstellkräften wieder nach vorne schwingen, wobei der Kopf und der Körper des Fahrzeuginsassen nach der vorangehenden Rückwärtsbewegung nunmehr in Fahrtrichtung beschleunigt werden. Dieser Rückprall oder "rebound" ist in zweifacher Hinsicht unerwünscht, weil eine schnell aufeinanderfolgende Rückwärts-/Vorwärtsbewegung des Kopfs ebenfalls zu Verletzungen der Halswirbelsäule führen kann, und weil bei einem nicht angeschnallten Fahrzeuginsassen der Kopf und/oder Oberkörper gegen die Instrumententafel oder das Lenkrad schlagen kann, was andere Verletzungen zur Folge hat.

Aus der DE 29 45 060 C2 ist bereits eine Kopfstütze für Kraftfahrzeugsitze bekannt, deren Kopfpolsterträger aus einem kastenförmigen Unterteil und einem auf dem Unterteil abgestützten, in Bezug zum Unterteil bewegbaren wannenförmigen Oberteil besteht, wobei der Oberteil und der Unterteil konisch ineinander greifen, so dass sich der Oberteil bei einem Aufprall des Kopfs eines Fahrzeuginsassen unter starker Gleitreibung und/oder plastischer Verformung, d.h. unter Energieabsorption, auf dem Unterteil nach unten verschiebt, um die durch den Aufprall in die Kopfstütze eingeleitete Energie rückprallfrei zu verzehren. Die bekannte Kopfstütze weist jedoch zum Einen einen verhältnismäßig komplizierten Aufbau auf. Zum Anderen muss der Kopf des Fahrzeuginsassen schräg von vorne und oben auf die Kopfstütze prallen, um die beschriebene Wirkung zu erzielen. Bei einer Kopfstütze, deren Höhe richtig eingestellt ist, wird jedoch der Aufprall des Kopfes im wesentlichen horizontal von vorne erfolgen, so dass es nicht zu der erwünschten Verschiebung zwischen Ober- und Unterteil und damit auch nicht zu der vorgesehenen Energieabsorption kommt. In diesem Fall werden bei einem Heckaufprall auch hier die Trag- oder Haltestangen unter Biegung elastisch verformt, so dass der unerwünschte schwingungsbedingte Rückprall auftritt.

Allerdings sind Kopfstützen häufig auch zu tief eingestellt, wodurch der Kopf des Fahrzeuginsassen schräg von oben oder in Extremfällen sogar steil von oben gegen die Kopfstütze schlägt, wie in der DE 29 45 060 C2 beschrieben, wodurch die Schutzwirkung der Kopfstütze stark verringert wird. Dieses Problem wird noch dadurch verstärkt, dass höhenverstellbare Kopfstützen durch die von oben her einwirkende Kraftkomponente der Aufprallkraft noch weiter nach unten bis in die unterste Endstellung verschoben werden, bevor sie den Kopf des Fahrzeuginsassen endgültig abbremsen. Dies kann auch bei der aus der DE 29 45 060 C2 bekannten Kopfstütze der Fall sein, bevor es zu einer Verformung oder Verschiebung eines zusätzlich im Inneren der Kopfstütze vorgesehenen Bügels kommt, der bei einem Aufprall von oben energieverzehrend wirken soll.

Weiter ist aus der DE 296 03 467 U1 ein Fahrzeugsitz der eingangs genannten Art bekannt, bei dem ein Teil der Rückenlehne mit der Kopfstütze als zweiarmiger Hebel um eine quer zur Fahrtrichtung verlaufende Achse schwenkbar ist, um bei einem Heckaufprall die Kopfstütze, d.h. den einen Hebelarm nach vorne zu schwenken, so dass ihr Abstand vom Kopf des Fahrzeuginsassen geringer wird, wobei sich der andere Hebelarm nach hinten bewegt. Ein Rückprall des Fahrzeuginsassen oder seines Kopfs infolge elastischer Anteile der Rückenlehne oder der Kopfstütze kann dadurch jedoch nicht verhindert werden, da die Kopfstütze schnell und ohne das Erfordernis einer Überschreitung einer vorgegebenen Kraft nach vorne bewegt werden soll.

Aus der DE 296 01 479 U1, der DE 296 03 991 U1, der DE 296 09 786 U1 und der DE 39 00 495 A1 sind weitere Fahrzeugsitze mit Kopfstützen bekannt, die bei einem Heckaufprall näher an den Kopf des Fahrzeuginsassen heran bewegt werden.

Weiter ist aus der DE 41 20 608 A1 ein Fahrzeugsitz der eingangs genannten Art bekannt, bei dem die Rückenlehne im Falle eines Frontalaufpralls zuerst nach vorne verlagert wird und dann bei Eintritt des Rückpralls durch Absorber oder einen Gassack gebremst zurück in ihre Ausgangsstellung verlagert wird. Bei einem Heckaufprall werden jedoch weder der Gassack noch die Absorber aktiviert, da es nicht zu einer vorangehenden Vorwärtsverlagerung gekommen ist.

Aus der DE 30 18 735 A1 ist weiter ein Fahrzeugrücksitz für einen Beifahrer mit Blick nach hinten bekannt, der sich aus seiner Halterung löst und nach vorne verschoben wird, wenn die vom Beifahrer auf den Sitz ausgeübte Aufprallkraft einen vorgegebenen Betrag übersteigt, um so den Beifahrer aus dem Gefahrenbereich eines beim Heckaufprall von hinten in die Fahrgastzelle eindringenden Objekts zu entfernen. Eine Verminderung von Rückprallbewegungen infolge von elastischen Anteilen ist ebenso wenig vorgesehen, wie eine nennenswerte Energieabsorption, die hier kontraproduktiv wäre, da sie die Vorwärtsbewegung des Sitzes verlangsamen würde.

Schließlich beschreibt die WO-A-99/44855 als nachveröffentlichtes Dokument einen Fahrzeugsitz mit einem Energieabsorptionselement im Bereich eines Schwenkgelenkes zwischen Rückenlehne und Sitzteil, welches eine energieverzehrende Veränderung der Neigung der Rückenlehne gegenüber dem Sitzteil bewirkt. Das dort beschriebene Energieabsorptionselement weist durch das Schwenkgelenk zwei zueinander verdrehbare Teile auf.

Als nächstliegender Stand der Technik wird die EP 0 556 884 A2 betrachtet, die einen Fahrzeugsitz mit einem Sitzteil, einer Rückenlehne und einer mit der Rückenlehne verbundenen Kopfstütze beschreibt, wobei sich die Kopfstütze, die Rückenlehne mit der Kopfstütze und/oder das Sitzteil mit der Rückenlehne und der Kopfstütze bei einem Aufprall auf das Heck des Fahrzeugs unter Energieabsorption unelastisch entgegen der Richtung der auf das Fahrzeug ausgeübten Aufprallkraft begrenzt verlagern, wenn in Folge der Trägheit eines auf dem Fahrzeug sitzenden Fahrzeuginsassen Kräfte auf die Kopfstütze, die Rückenlehne und/oder das Sitzteil ausgeübt werden, die vorgebbare Werte übersteigen und wobei mindestens ein in der Rückenlehne, zwischen der Rückenlehne und dem Sitzteil, im Sitz und/oder zwischen dem Sitzteil und einem den Sitzteil tragenden Boden des Fahrzeugs angeordnetes Energieabsorptionselement, während der begrenzten unelastischen Verlagerung Energie absorbiert.

Mindestens eines der Energieabsorptionselemente ist in der Rückenlehne und/oder zwischen der Rückenlehne und dem Sitzteil angeordnet und verhindert einen Rückprall der Kopfstütze. Ein Energieabsorptionselement ist im Bereich eines Schwenkgelenks zwischen der Rückenlehne und dem Sitzteil angeordnet und bewirkt eine energieverzehrende Veränderung der Neigung der Rückenlehne gegenüber dem Sitzteil, wenn eine entgegen der Richtung der Aufprallkraft auf die Kopfstütze einwirkende Kraftkomponente einen vorgebbaren Wert übersteigt.

Ausgehend hiervon liegt der Erfindung die Aufgabe zugrunde, bei einem Kraftfahrzeugsitz der eingangs genannten Art die bei einem Aufprall auf das Heck des Fahrzeugs vom Fahrzeugsitz und der Kopfstütze auf den Fahrzeuginsassen ausgeübten Reaktionskräfte zu begrenzen und einen durch elastisch verformbare Komponenten des Sitzes hervorgerufenen Rückprall des Fahrzeuginsassen oder seines Kopfs zu vermeiden beziehungsweise zu minimieren.

Diese Aufgabe wird in Verbindung mit den Merkmalen des Oberbegriffs des Patentanspruchs 1 erfindungsgemäß dadurch gelöst, dass ein Energieabsorptionselement mindestens zwei um eine Schwenkachse des Schwenkgelenks in Bezug zueinander verdrehbare Teile mit gegeneinander angepressten Oberflächen mit einem hohen Reibungskoeffizienten aufweist.

Der Erfindung liegt der Hauptgedanke zugrunde, dass sich die bei einem Heckaufprall vom Sitz auf den Fahrzeuginsassen ausgeübten Reaktionskräfte und insbesondere die von der Kopfstütze auf den Kopf des Fahrzeuginsassen ausgeübten Kräfte dadurch begrenzen lassen, dass sich die Kopfstütze, die Rückenlehne mit der Kopfstütze und/oder der Sitzteil mit der Rückenlehne und der Kopfstütze begrenzt nach hinten verlagern, wenn die darauf einwirkenden Kräfte vorgegebene Werte übersteigen. Durch die gleichzeitig erfolgende Energieabsorption im Bereich des Schwenkgelenkes wird sichergestellt, dass die nach der Rückwärtsverlagerung einwirkenden Reaktionskräfte so gering sind, dass sie nicht mehr zu Verletzungen führen können.

Im Fahrzeugsitz ist ferner vorgesehen, dass in der Kopfstütze, im Sitzteil und/oder zwischen dem Sitzteil und einem Boden des Fahrzeugs und bevorzugt in der Rückenlehne mindestens ein weiteres Energieabsorptionselement angeordnet ist, das während der begrenzten Verlagerung Energie absorbiert und durch die begrenzte Rückverlagerung der Kopfstütze und gegebenenfalls der Rückenlehne nach dem Aufprall Rückprall- oder Schwingungsbewegungen der Kopfstütze verhindert.

So können beispielsweise Energieabsorptionselemente in der Rückenlehne, vorzugsweise im Bereich einer die Kopfstütze mit dem Sitz verbindenden Kopfstützenhalterung, den Platzbedarf für dieses Element in der Kopfstütze selbst verringern. Zum Anderen lässt sich insbesondere bei einem horizontalen Aufprall des Kopfs auf die Kopfstütze die Aufprallenergie in der Rückenlehne erheblich besser als in der Kopfstütze selbst absorbieren, in der sich wegen der geringen Tiefe nur schlecht in dieser Richtung wirksame Energieabsorptionselemente unterbringen lassen.

In der Rückenlehne sollen diejenigen Energieabsorptionselemente integriert sein, welche die Aufprallenergie absorbieren, die aus einer im wesentlichen entgegen der Fahrtrichtung und quer zur Längsrichtung der Kopfstützenhalterung auf die Kopfstütze einwirkenden Kraftkomponente der Aufprallkraft herrührt, während Energieabsorptionselemente zur Absorption derjenigen Aufprallenergie, die aus einer in Längsrichtung der Kopfstützenhalterung auf die Kopfstütze einwirkenden Kraftkomponente der Aufprallkraft herrührt, in der Kopfstütze selbst und/oder ebenfalls in der Rückenlehne angeordnet sein können.

Durch die genannten Maßnahmen können außerdem die Energieabsorptionselemente jeweils an solchen Stellen angeordnet werden, wo ihre Integration besonders einfach zu verwirklichen ist, wo ausreichend Platz für die Energieabsorptionselemente vorhanden ist und/oder wo normalerweise bereits vorhandene Komponenten zur Integration der Energieabsorptionselemente genutzt werden können.

So sieht die Erfindung vor, ein Energieabsorptionselement im Bereich des Schwenkgelenks zwischen der Rückenlehne und dem Sitzteil anzuordnen, wo sich eine zur Energieabsorption erforderliche Relativbewegung zweier im Reibeingriff stehender Teile durch eine Neigungsänderung der Rückenlehne verwirklichen lässt und zudem später mit geringem Aufwand rückgängig gemacht werden kann. Die beiden im Reibeingriff stehenden Teile sind zweckmäßig um die Schwenkachse des Schwenkgelenks in Bezug zueinander verdrehbar und weisen gegeneinander angepresste Oberflächen mit einem hohen Reibungskoeffizienten sowie in bevorzugter Ausgestaltung Anschlageinrichtungen auf, die eine Neigungsänderung der Rückenlehne über einen vorgegebenen Wert hinaus verhindern.

Die beiden starr mit der Rückenlehne beziehungsweise mit dem Sitzteil verbundenen Teile werden unter Verschwenken der Rückenlehne und unter Erzeugung von Reibungswärme aus einem Teil der Aufprallenergie in Bezug zueinander verdreht, wenn die quer zur Längsrichtung der Halterung auf die Kopfstütze einwirkende Kraftkomponente einen vorgegebenen Schwellenwert übersteigt.

Neben einer Energieabsorption durch Erzeugung von Reibungswärme eignet sich auch eine Energieabsorption durch plastische Verformung gut für den vorgesehenen Anwendungszweck, wobei ein weiteres, neben dem im Schwenkgelenk erfindungsgemäß angeordneten Energieabsorptionselement eine Öffnung aufweist, die beim Überschreiten einer vorgegebenen Kraft auf die Kopfstütze durch ein in Bezug zum Energieabsorptionselement bewegliches Spreizelement aufgeweitet und dabei plastisch verformt wird. Diese Art von Energieabsorptionselement gestattet auf einem verhältnismäßig kurzen Bewegungsweg die Absorption hoher Energiemengen.

Zur Absorption der Aufprallenergie, die aus einer in Längsrichtung der Kopfstützenhalterung auf die Kopfstütze einwirkenden Kraftkomponente herrührt, wird das Spreizelement in einer vorteilhaften Ausgestaltung der Erfindung von einem Stirnende der Kopfstützenhalterung gebildet wird, das in eine sich verjüngende Öffnung eines das Stirnende der Halterung umschließenden Rohrs eindringt, wenn die Kraftkomponente einen vorgegebenen Wert übersteigt. Ein derartiges Energieabsorptionselement weist einen sehr geringen Platzbedarf auf und kann sowohl am oberen und/oder am unteren Ende der Kopfstützenhalterung vorgesehen werden. Die Aufweitung einer Öffnung des Energieabsorptionselements durch ein Spreizelement kann jedoch auch zur Absorption der Aufprallenergie verwendet werden, die aus einer quer zur Längsrichtung der Kopfstützenhalterung auf die Kopfstütze einwirkenden Kraftkomponente herrührt. In diesem Fall ist die Öffnung vorzugsweise in einem starr mit dem Lehnenrahmen verbundenen Energieabsorptionselement als Schlitzöffnung ausgebildet, die sich quer zur Längsrichtung der Halterung und parallel zur Fahrtrichtung erstreckt, so dass sich die in Bezug zum Lehnenrahmen verschiebbare Halterung oder ein starr mit der Halterung verbundenes Bauteil unter Aufweitung der Schlitzöffnung in Richtung der Kraftkomponente in der Öffnung verschieben kann. Um zu verhindern, dass eine höhenverstellbare Kopfstütze bei einem im wesentlichen von oben her erfolgenden Aufprall des Kopfs eines Fahrzeuginsassen in die unterste Endstellung verschoben wird, bevor sie den Kopf des Fahrzeuginsassen ausreichend abbremst oder energieverzehrend wirkt, sieht eine weitere bevorzugte Ausgestaltung vor, dass die Höhenverstellvorrichtung der Kopfstütze bei einem Aufprall durch eine quer zur Längsrichtung der Halterung einwirkende Kraftkomponente blockiert wird. Dies kann beispielsweise dadurch erfolgen, dass die Kopfstützenhalterung durch diese Kraftkomponente quer zu ihrer Längsachse in Eingriff mit mindestens einem Sperrelement bewegt wird, das vorzugsweise von einem der Energieabsorptionselemente gebildet wird.

Mindestens ein weiteres Energieabsorptionselement ist im Bereich einer Halterung des Sitzteils angeordnet und bewirkt eine energieverzehrende Relativbewegung des Sitzteils in Bezug zur Halterung oder der Halterung in Bezug zu einer den Sitz tragenden Unterlage, wenn eine entgegen der Richtung der Aufprallkraft auf das Sitzteil, die Rückenlehne und/oder die Kopfstütze einwirkende Kraftkomponente einen vorgegebenen Wert übersteigt. Vorzugsweise bewirkt dabei die Relativbewegung des Sitzes gegenüber der Unterlage gleichzeitig ein Absenken des vorderen Endes des Sitzteils oder ein Anheben des hinteren Endes des Sitzteils, um die Rückenlehne steiler zu stellen und dadurch eine bessere Abstützung des Fahrzeuginsassen zu erreichen.

Im Folgenden wird der Kraftfahrzeugsitz anhand einiger Zeichnungen in schematischer Weise näher dargestellt. Es zeigen:
- Figur 1:: eine Seitenansicht eines Kraftfahrzeugsitzes mit mehreren Energieabsorptionselementen;
- Figur 2:: eine vergrößerte, teilweise geschnittene Ansicht mit erfindungsgemäßen Energieabsorptionselementen in Form eines mit Reibscheiben ausgestatteten Neigungsverstellrades des Kraftfahrzeugsitzes entlang der Linie A-A der Figur 1;
- Figuren 3a und b:: Ansichten der beiden erfindungsgemäßen Reibscheiben aus Figur 2 entlang der Linien B-B und C-C der Figur 2;
- Figur 4:: eine vergrößerte teilweise geschnittene Seitenansicht der Kopfstütze aus Figur 1;
- Figur 5:: eine vergrößerte teilweise geschnittene Seitenansicht einer mit Energieabsorptionselementen versehenen Führung für die Kopfstützenhalterung in der Rückenlehne;
- Figur 6:: eine vergrößerte Querschnittsansicht entlang der Linie D-D der Figur 5;
- Figur 7:: eine Ansicht ähnlich Figur 6, jedoch bei einer abgewandelten Ausführungsform.
- Figur 8:: eine Schnittansicht entlang der Linie E-E der Figur 1, jedoch zur Vereinfachung mit einem Paar Halteschrauben;
- Figur 9:: eine Seitenansicht eines Kraftfahrzeugsitzes mit einem abgewandelten Sitzteil und
- Figur 10:: eine Seitenansicht eines Kraftfahrzeugsitzes mit einem weiteren abgewandelten Sitzteil.

Der in den Zeichnungen dargestellte Fahrzeugsitz 2 besteht im wesentlichen aus einem mittels einer Sitzhalterung 4 auf dem Boden 6 eines Fahrzeugs befestigten Sitzteil 8, einer Rückenlehne 10, deren Neigung gegenüber dem Sitzteil 8 verstellbar ist, sowie einer höhenverstellbaren Kopfstütze 12, die über eine aus zwei Rundstangen 14 bestehende Kopfstützenhalterung 16 mit der Rückenlehne 10 verbunden ist. Die Sitzhalterung 4 umfasst im wesentlichen zwei zur Fahrtrichtung parallele Führungsschienen 18, zwischen denen ein Ausleger 20 verschiebbar geführt ist, der über das hintere Ende des Sitzteils 8 nach unten übersteht, sowie eine Arretiervorrichtung 22 zum Arretieren des Sitzteils 8 in einer von mehreren, in Fahrtrichtung hintereinander angeordneten Verstellpositionen.

Da ein auf dem Fahrzeugsitz 2 sitzender Fahrzeuginsasse bei einem Heckaufprall infolge seiner Trägheit entgegen der Fahrtrichtung gegenüber dem Sitz 2 beschleunigt wird, übt er Kräfte auf den Sitz 2 aus, die wiederum Reaktionskräfte des Sitzes 2 auf den Fahrzeuginsassen zur Folge haben. Um zu verhindern, dass diese Reaktionskräfte vorgegebene Werte überschreiten, und um einen Rückprall oder "rebound" des Kopfs des Fahrzeuginsassen zu verhindern, der wegen einer elastischen Verformung der Kopfstützenhalterung 16 und der Rückenlehne 10 infolge der vom Fahrzeuginsassen auf die Kopfstütze 12 und die Rückenlehne 10 ausgeübten Kräfte ist, weist der Fahrzeugsitz 2 mehrere Energieabsorptionselemente 24, 26, 28, 30, 32 auf, die eine begrenzte unelastische Verlagerung der Kopfstütze 12, der Rückenlehne 10 mit der Kopfstütze 12 und/oder des Sitzteils 8 mit der Rückenlehne 10 und der Kopfstütze 12 bewirken, wenn die vom Fahrzeuginsassen ausgeübten Kräfte vorgegebene Werte überschreiten, und die einen Teil der Aufprallenergie des Fahrzeuginsassen absorbieren.

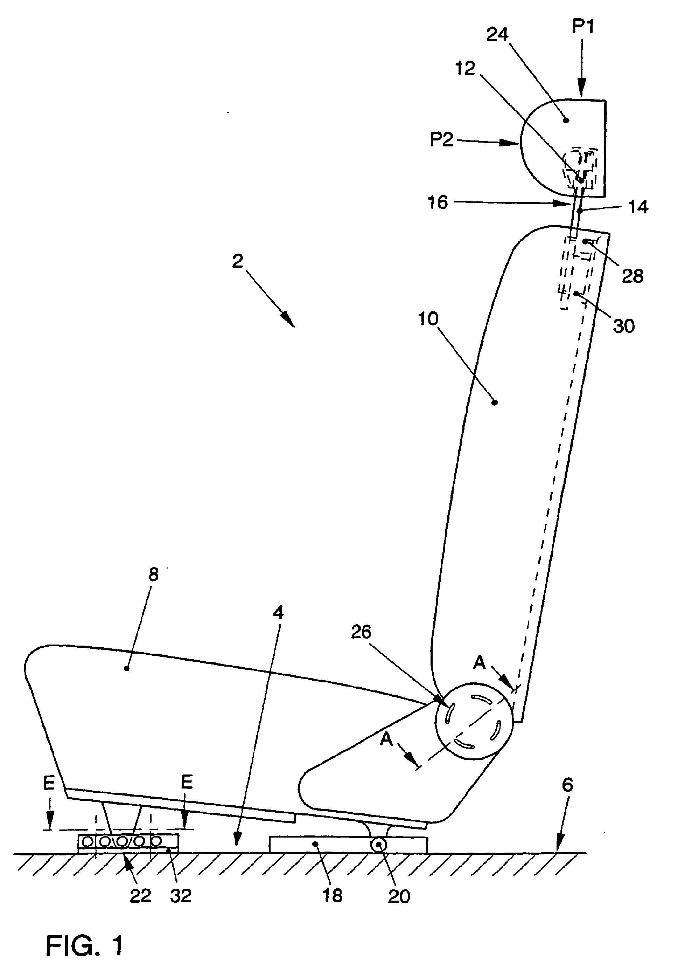

Bei dem in Figur 1 dargestellten Fahrzeugsitz 2 absorbiert das in der Kopfstütze 12 angeordnete Energieabsorptionselement 24 im wesentlichen nur Aufprallenergie, die von einer Kraftkomponente P1 der Aufprallkraft des Kopfs auf die Kopfstütze 12 herrührt, welche in Längsrichtung der Rundstangen 14 der Kopfstützenhalterung 16 auf die Kopfstütze 12 einwirkt, und begrenzt die Reaktionskraft der Kopfstütze 12 in dieser Richtung auf einen maximalen vorgegebenen Wert (vergleiche Figur 1). Demgegenüber wird in der Rückenlehne 10 beziehungsweise zwischen der Rückenlehne 10 und dem Sitzteil 8 im Wesentlichen Aufprallenergie absorbiert, die von einer quer zur Längsrichtung der Halterung 16 und entgegen der Stoßrichtung beim Heckaufprall auf die Kopfstütze 12 einwirkenden Kraftkomponente P2 der Aufprallkraft herrührt und wegen des begrenzten Platzangebots im Inneren der Kopfstütze 12 dort nicht oder nur schlecht abgebaut werden kann. Gleichzeitig wird die Reaktionskraft der Kopfstütze 12 in dieser Richtung auf einen maximalen vorgegebenen Wert begrenzt. Das in der Sitzhalterung 4 angeordnete Energieabsorptionselement 32 dient insbesondere zur Begrenzung der vom Sitzteil 8 und der Rückenlehne 10 auf den Körper des Fahrzeuginsassen ausgeübten Kräfte und zur Absorption eines Teils von dessen Aufprallenergie.

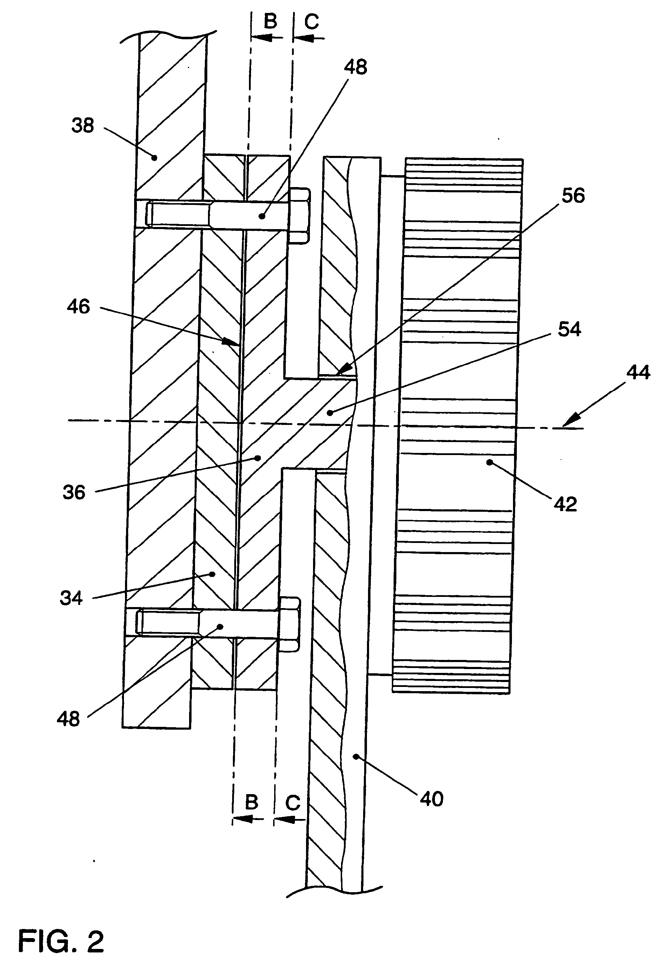

Wie am besten in Figur 2 dargestellt, umfasst das zwischen der Rückenlehne 10 und dem Sitzteil 8 angeordnete erfindungsgemäße Energieabsorptionselement 26 zwei Reibscheiben 34, 36, die zwischen einem an ein Schwenkgelenk der Rückenlehne 10 angrenzenden Lehnenrahmen 38 und einer starr mit dem Sitzteil 8 verbundenen Trägerwange 40 sitzseitig von einem Handrad 42 zum Verstellen der Lehnenneigung angeordnet sind. Eine der beiden zur Schwenkachse 44 des Schwenkgelenks konzentrischen kreisförmigen Reibscheiben 36 weist auf ihrer der anderen Scheibe 34 zugewandten Breitseitenfläche einen Belag 46 auf, der mit der gegenüberliegenden rauhen Breitseitenfläche der Scheibe 34 einen hohen Reibungskoeffizienten aufweist. Die beiden Reibscheiben 34, 36 werden durch vier Halteschrauben 48 zusammengepresst, die gleichzeitig zur Befestigung am Lehnenrahmen 38 dienen. Während die dem Lehnenrahmen 38 benachbarte Reibscheibe 34 vier Durchgangsbohrungen 50 für die Halteschrauben 48 aufweist, so dass sie sich nicht gegenüber dem Lehnenrahmen 38 verdrehen kann, besitzt die der Trägerwange 40 benachbarte Reibscheibe 36 vier Schlitzöffnungen 52 in Form von Kreisringsegmenten, die konzentrisch zur Schwenkachse 44 in gleichen Winkelabständen angeordnet sind. Die Schlitzöffnungen 52 werden jeweils von einer der Halteschrauben 48 durchsetzt, die gegen ein Stirnende der Schlitzöffnung 52 anliegt. Das andere Stirnende der Schlitzöffnung 52 bildet beim gegenseitigen Verdrehen der beiden Reibscheiben 34, 36 einen Anschlag für die Halteschrauben 48, wodurch der maximale Drehwinkel auf einen vorgegebenen Wert von etwa 30 Grad begrenzt wird.

Über die zur Trägerwange 40 benachbarte Reibscheibe 36 steht ein zur Schwenkachse 44 konzentrischer Zapfen 54 über, der eine zylindrische Durchtrittsöffnung 56 der Trägerwange 40 durchsetzt und starr mit dem Sonnenrad eines im Inneren des Handrades 42 untergebrachten Planetengetriebes (nicht dargestellt) zum Verstellen der Lehnenneigung verbunden ist, dessen Gehäuse 60 an der Außenseite der Trägerwange starr befestigt ist.

Zum Verstellen der Lehnenneigung wird das Handrad 42 verdreht, wobei sich der Zapfen 54 in der Durchtrittsöffnung 56 dreht und beide Reibscheiben 36, 34 wegen der Verbindung mit dem Zapfen 54 beziehungsweise wegen der zwischen ihnen wirkenden Haftreibung gemeinsam mit der Rückenlehne 10 gegenüber der Trägerwange 40 und damit dem Sitzteil 8 verschwenkt werden.

Demgegenüber erzeugt bei einem Heckaufprall die Kraftkomponente P2 der vom Kopf des Fahrzeuginsassen auf die Kopfstütze 12 ausgeübten Aufprallkraft, die quer zur Längsrichtung der Halterung 16 und der Rückenlehne 10 ausgerichtet ist, aufgrund der selbstsperrenden Eigenschaften des Planetengetriebes zwischen den beiden Reibscheiben 34, 36 ein Drehmoment, das zum Verdrehen der Scheibe 34 führt, wenn die Kraftkomponente einen vorgegebenen Wert übersteigt. Bei der Drehbewegung der beiden Scheiben 34, 36 in Bezug zueinander wird infolge des hohen Reibungskoeffizienten ein Teil der eingeleiteten Energie in Reibungswärme umgesetzt, so dass die elastische Verformung der Halterung 16 und damit der Rückprall kleiner ist. Die Relativbewegung der beiden Scheiben 34, 36 wird gestoppt, wenn die Halteschrauben 48 gegen die anderen Stirnenden der Schlitzöffnungen 52 anschlagen und die Schwenkbewegung der Rückenlehne 10 gegenüber dem Sitzteil 8 in einer um etwa 30 Grad gegenüber der Ausgangsstellung nach hinten gekippten Stellung anhalten.

Durch Lösen der Halteschrauben 48, Zurückdrehen der Reibscheibe 36, und ggf. Ersetzen des Reibbelags 46 kann mit geringem Aufwand der ursprüngliche Zustand wiederhergestellt werden.

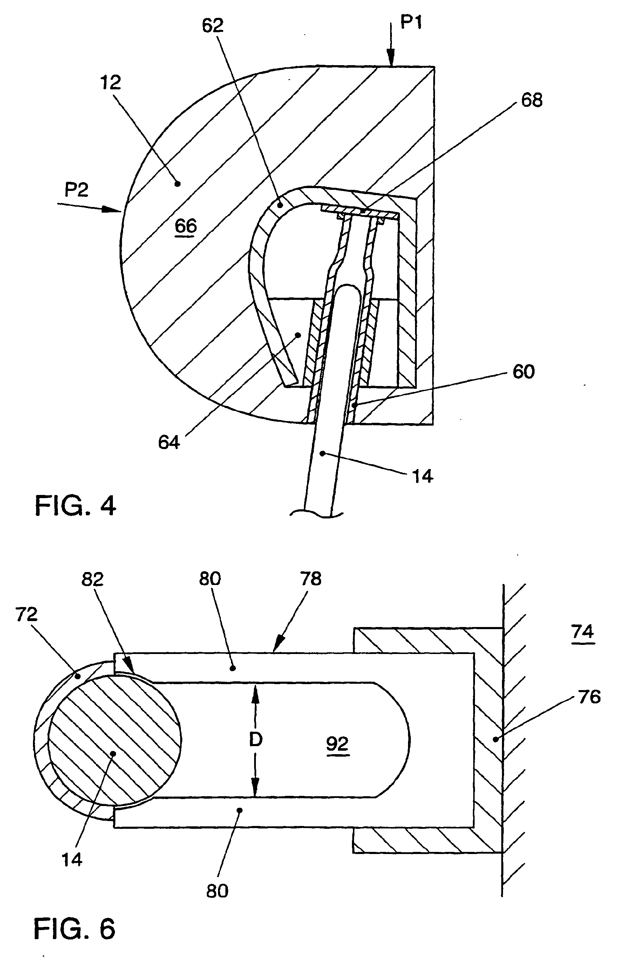

Demgegenüber wird, wie Figur 1 ebenfalls zeigt ein wesentlicher Teil der Aufprallenergie, der aus der Kraftkomponente P1 herrührt, in der Kopfstütze 12 selbst und in dem Energieabsorptionselement 24 absorbiert. Wie am besten in Figur 4 dargestellt, ragen die oberen Stirnenden der beiden Rundstangen 14 der Halterung 16 jeweils in ein nach unten offenes Aufnahmerohr 60, das ein verjüngtes oberes Ende aufweist. Das Aufnahmerohr 60 besteht aus einem unter Energieaufnahme plastisch verformbaren und vorzugsweise duktilen Material, kann jedoch alternativ auch aus Stahl bestehen und mit einem oder mehreren schmalen Längsschlitzen (nicht dargestellt) versehen sein, die eine plastische Verformung unter Aufspreizen der zwischen den Schlitzen angeordneten Segmente ermöglichen. Das nach unten offene Aufnahmerohr 60 wird von einem Stoßfängerelement 62 aus Kunststoff gehalten, welches das Aufnahmerohr 60 umgibt und durch eine große gerundete Oberfläche Kopfverletzungen des Fahrzeuginsassen verhindert. Innerhalb des Stoßfängerelements 62 angeordnete Kraftübertragungsstege 64 leiten die durch das umgebende Polstermaterial 66 auf das Stoßfängerelement 62 übertragene, quer zur Längsrichtung der Halterung 16 einwirkende Kraftkomponente P2 in die Rundstangen 14 der Halterung 16 weiter, während die in Längsrichtung der Halterung 16 einwirkende Kraftkomponente P1 bewirkt, dass das Stoßfängerelement 62 die beiden parallelen Aufnahmerohre 60 nach unten auf die gerundeten Stirnenden der Rundstangen 14 drückt. Wenn P1 einen vorgegebenen Wert übersteigt, wird das verjüngte obere Ende der Aufnahmerohre 60 unter plastischer Verformung und damit unter Energieaufnahme aufgeweitet. Eine Metallplatte 68 zwischen dem oberen Stirnende des Aufnahmerohrs 60 und der Innenseite des Stoßfängerelements 62 verhindert, dass das Aufnahmerohr 60 die Oberseite des Stoßfängerelements 62 durchstößt.

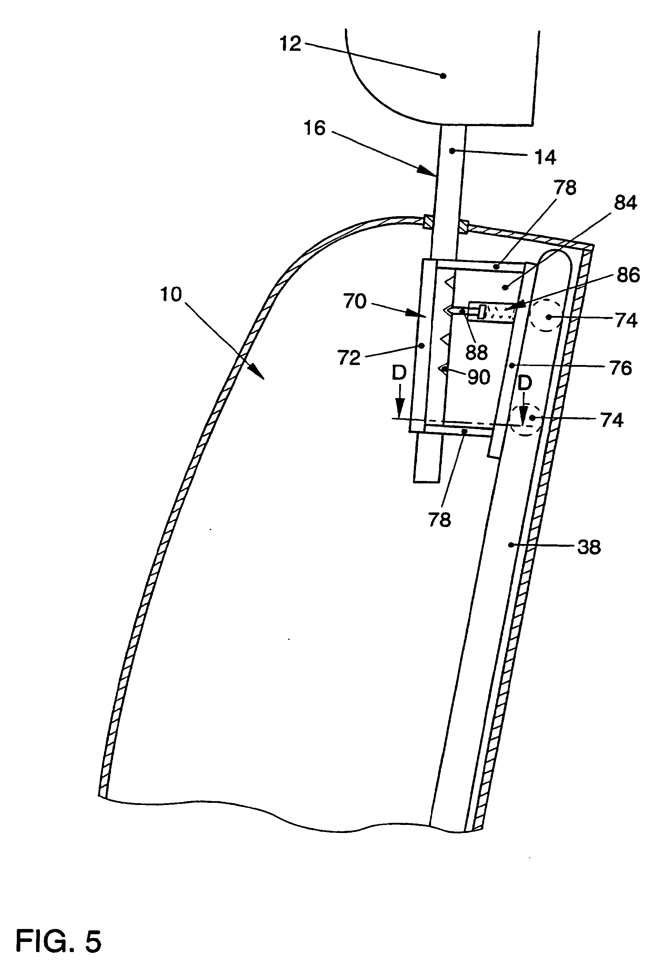

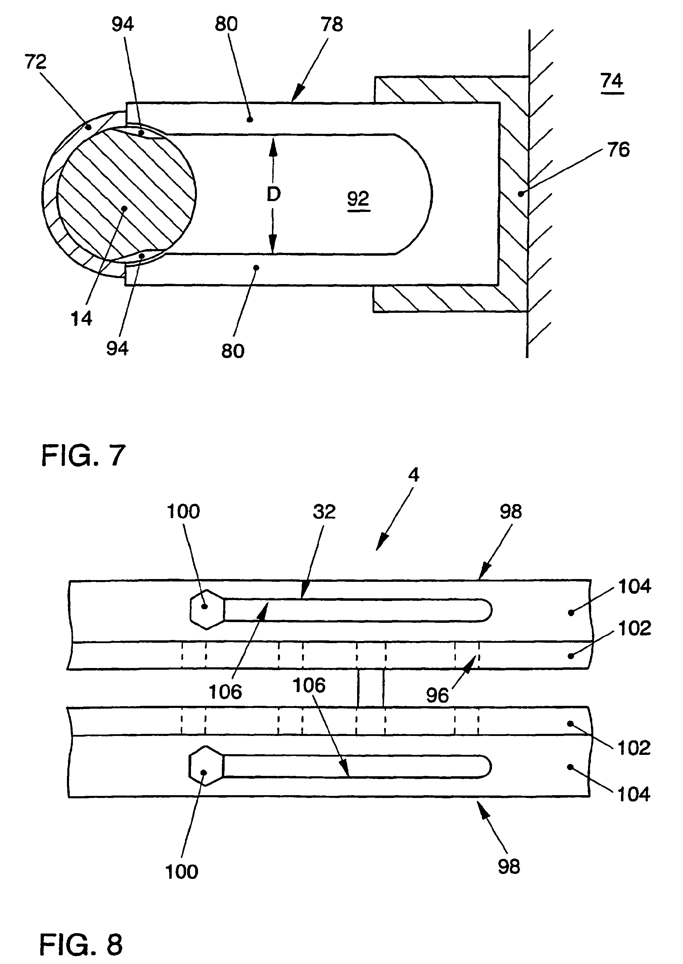

Wie in Figur 1 und am besten in den Figuren 5 und 6 dargestellt, sind alternativ oder zusätzlich zu den erfindungsgemäßen Reibscheiben 34, 36 im Schwenkgelenk vier weitere Energieabsorptionselemente 28, 30 in der Rückenlehne 10 vorgesehen. Anders als bei den Reibscheiben 34, 36 bewirkt die über die beiden Rundstangen 14 der Kopfstützenhalterung 16 in die Rückenlehne 10 übertragene und quer zur Längsrichtung der Halterung 16 auf die Kopfstütze 12 einwirkende Kraftkomponente P2 der Aufprallkraft bei diesen paarweise im Abstand entlang zweier zur Höhenverstellung der Kopfstütze 12 dienenden Führungen für die Rundstangen 14 der Kopfstützenhalterung 16 in der Rückenlehne 10 angeordneten Energieabsorptionselementen 28, 30 eine plastische Verformung.

Die beiden Führungen 70 bestehen jeweils aus einem in Fahrtrichtung vor den Rundstangen 14 angeordneten und in deren Längsrichtung verlaufenden halbzylindrischen Führungsrohr 72, das starr mit dem Lehnenrahmen 38 verbunden ist. Die Verbindung erfolgt durch zwei im Abstand übereinander am oberen beziehungsweise unteren Ende des Führungsrohrs 72 angeordnete Halteelemente 78, deren entgegengesetzte Enden mit dem Führungsrohr 72 beziehungsweise mit einer an Querholmen 74 der Rückenlehne befestigten Längsstrebe 76 mit U-Profil verschweißt sind. Wie am besten in Figur 6 dargestellt, weisen die aus einem Stahlblech ausgestanzten Halteelemente 78 in Draufsicht einen im wesentlichen U-förmigen Umriss auf, wobei sich ihr geschlossenes hinteres Ende im U-Profil der Längsstrebe 76 abstützt und in dieses eingeschweißt ist, während die vorderen Enden der beiden Schenkel 80 jeweils mit einem der Längsränder des Führungsrohrs 72 verschweißt sind. Die Enden der Schenkel 80 weisen an ihren einander zugewandten Innenseiten kleine Aussparungen 82 auf, deren Form an die Rundung der im Führungsrohr 72 längsverschiebbaren Rundstange 14 angepasst ist, so dass die Schenkelpaare 80 der beiden Halteelemente 78 zusammen mit dem Führungsrohr 72 die Rundstangen 78 in deren Längsrichtung führen. Hinter den Aussparungen 82 ist der Abstand D zwischen den beiden Schenkeln 80 kleiner als der Durchmesser der Rundstange 14. Zwischen den beiden Halteelementen 78 befindet sich ein Rastmechanismus 84 mit einem durch eine Schraubendruckfeder 86 vorgespannten Rastbolzen 88, dessen gerundetes vorderes Ende sich mit einer von mehreren im Abstand entlang der benachbarten Rundstange 14 angebrachten Kerben 90 in Eingriff bringen lässt, um die höhenverstellbare Kopfstütze 12 in vorgegebenen Höhen zu verrasten.

Wenn die Kraftkomponente P2 einen vorgegebenen Wert übersteigt, wird die Rundstange 12 unter Auseinanderbiegen der beiden Schenkel 80 der Halteelemente 78 in den Schlitzöffnungen 92 zwischen den Schenkeln 80 nach hinten in Richtung der Längsstrebe 76 verschoben, wobei durch die plastische Verformung der Schenkel 80 Aufprallenergie absorbiert und somit ein Rückprall der Kopfstütze 12 verhindert wird. Bei dem in Figur 7 dargestellten Ausführungsbeispiel weist die im Führungsrohr 72 verschiebbare Rundstange 14 zwei Reihen von paarweise übereinander entlang der Stange 14 angeordneten Ausnehmungen 94 auf, von denen in jeder Raststellung ein Paar den vorderen Enden der Schenkel 80 des oberen Halteelements 78 gegenüberliegt. Die Ausnehmungen 94 sind etwas höher als die Materialstärke der Schenkel 80, so dass diese in die gegenüberliegenden Ausnehmungen 94 eindringen können. In diesem Fall werden die Rundstangen 14 in einem vom unteren Halteelement 78 gebildeten Schwenklager bereits dann geringfügig nach hinten verschwenkt, wenn das Drehmoment der von vorne auf die Kopfstütze 12 einwirkenden Kraftkomponente P2 das entgegenwirkende, verhältnismäßig geringe Drehmoment infolge der Kraft der Schraubendruckfeder 86 des Rastmechanismus 84 übersteigt. Die Schwenkbewegung führt zu einem Eingriff der vorderen Enden der Schenkel 80 in die Ausnehmungen 94 und damit zum Blockieren des Höhenverstellmechanismus, so dass die Kopfstütze 12 durch die Kraftkomponente P1 nicht nach unten in die unterste Endstellung verschoben werden kann, bevor sie den Kopf des Fahrzeuginsassen wirkungsvoll abbremst und ggf. durch Verformung des verjüngten Aufnahmerohrs 60 Aufprallenergie absorbiert.

Wenn der Höhenverstellmechanismus innerhalb der Kopfstütze angeordnet ist, wie dies bei manchen Kopfstützen der Fall ist, dann können die verjüngten Aufnahmerohre am unteren Ende der Rundstangen angeordnet sein, wobei eine ähnliche Vorrichtung, wie zuvor beschrieben, dafür sorgt, dass sich die Kopfstützen nicht die unterste Endstellung verschieben können. In diesem Fall könnten prinzipiell die Energieabsorptionselemente zum Absorbieren der Aufprallenergie infolge der Kraftkomponente P1 innerhalb der Kopfstütze angeordnet werden.

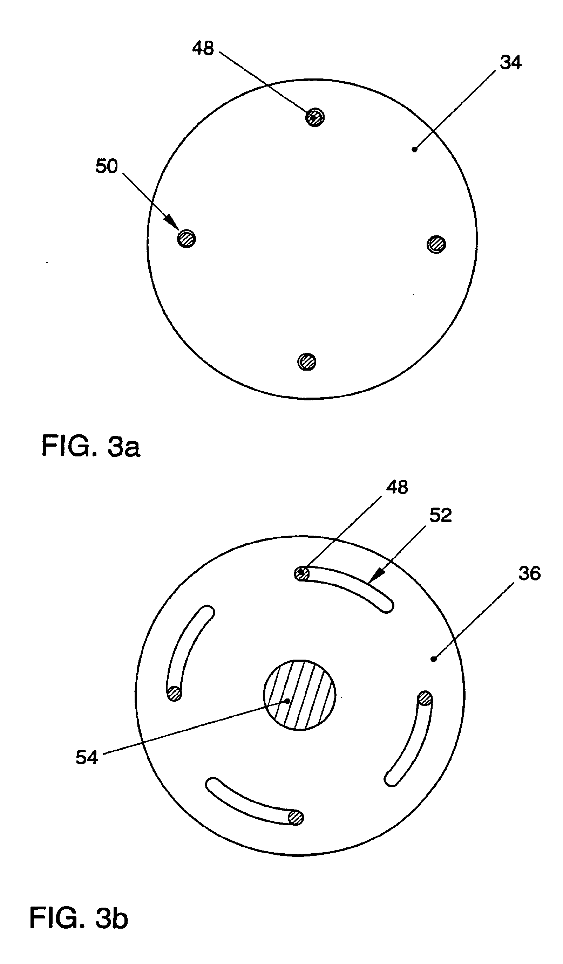

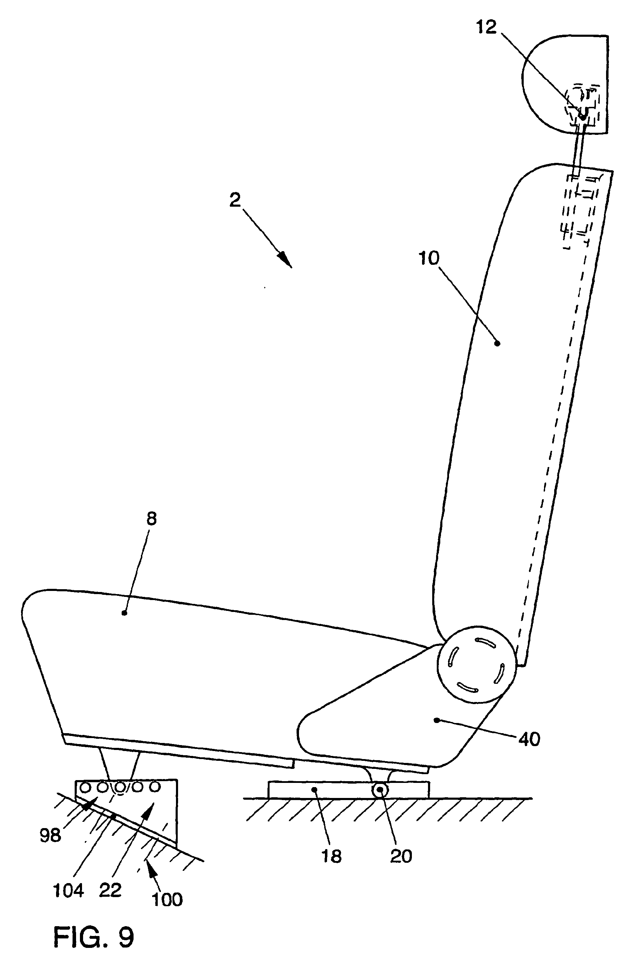

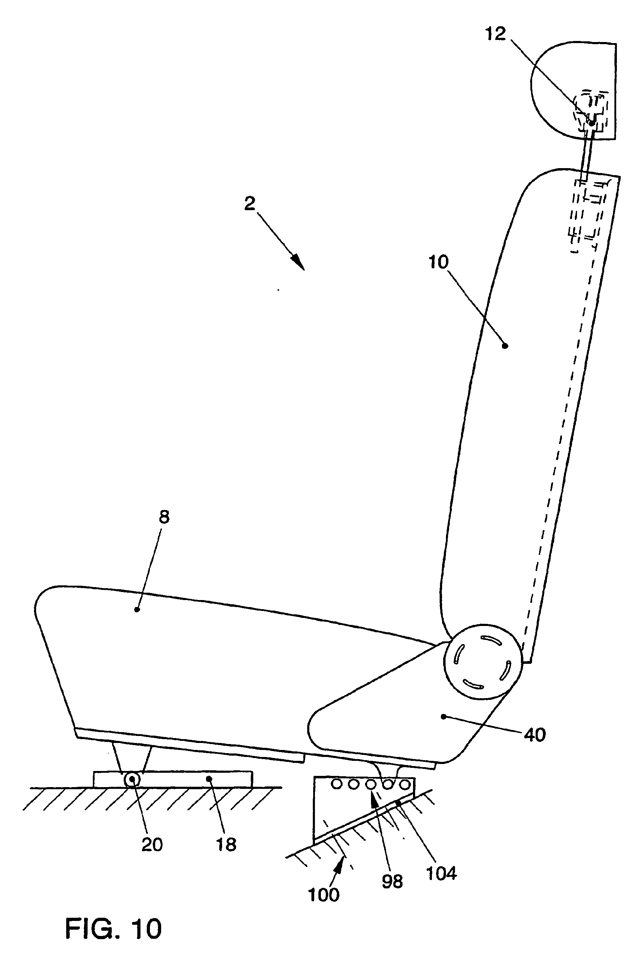

Wie am besten in Figur 8 dargestellt, wird das in der Sitzhalterung 4 angeordnete Energieabsorptionselement 32 von zwei mit Arretieröffnungen 96 versehenen parallelen Halteschienen 98 eines Arretierbocks der Arretiervorrichtung 22 und zwei oder mehr Befestigungsschrauben 100 gebildet, mit denen die Halteschienen 98 am Boden 8 des Kraftfahrzeugs befestigt sind. Die Halteschienen 98 besitzen jeweils ein Winkelprofil aus zwei im Abstand angeordneten parallelen vertikalen Schenkeln 102 und zwei quer zur Fahrtrichtung nach außen weisenden und gegen die Oberseite des Bodens 6 anliegenden horizontalen Schenkeln 104. Die horizontalen Schenkel 104 sind mit Langlöchern 106 versehen, die an ihrem in Fahrtrichtung hinteren Ende vom Schaft der jeweiligen Befestigungsschraube 100 durchsetzt werden. Wenn die vom Fahrzeuginsassen entgegen der Fahrtrichtung auf den Sitzteil 8 ausgeübte Kraft einen vorgegebenen Wert übersteigt, werden die Halteschienen 98 gegenüber den Halteschrauben 100 nach hinten verschoben, wobei durch die Reibung zwischen dem Schraubenkopf der fest angezogenen Halteschrauben 100 und/oder die plastische Verformung der gegenüberliegenden Ränder des Langlochs 106 infolge seiner gegenüber dem Schaftdurchmesser des Schraubenschaftes etwas kleineren Öffnungsweite Aufprallenergie absorbiert wird. Bei den in den Figuren 9 und 10 dargestellten Fahrzeugsitzen 2 sind die mit den Langlöchern 106 versehenen Schenkel 104 der Halteschienen 98 des Arretierbocks auf einer schrägen Oberfläche des Bodens 6 festgeschraubt, so dass die Verschiebung der Halteschienen 98 entgegen der Fahrtrichtung in Bezug zu den Halteschrauben 100 gleichzeitig bewirkt, dass das vordere Ende des Sitzteils 8 während der Verschiebung abgesenkt (Figur 9) beziehungsweise das hintere Ende des Sitzteils 8 angehoben wird. Dadurch wird die Neigung der Rückenlehne 10 steiler und damit der Fahrzeuginsasse besser abgestützt, beziehungsweise die unter Bezugnahme auf die Figuren 1 bis 3 beschriebene Neigungsveränderung der Rückenlehne 10 infolge der gegenseitigen Drehung der Reibscheiben 34, 36 wieder ausgeglichen.

## Patentansprüche

1. Fahrzeugsitz (2) mit einem Sitzteil (8), einer Rückenlehne (10) und einer mit der Rückenlehne (10) verbundenen Kopfstütze (12), die bei einem Aufprall auf das Heck des Fahrzeugs unter Energieabsorption unelastisch entgegen der Richtung der auf das Fahrzeug ausgeübten Aufprallkraft begrenzt verlagerbar sind, wenn infolge der Trägheit eines auf dem Fahrzeugsitz (2) sitzenden Fahrzeuginsassen Kräfte (P1, P2) auf die Kopfstütze (12), die Rückenlehne (10) und/oder das Sitzteil (8) ausgeübt werden, die vorgegebene Werte übersteigen, wobei ein Energieabsorptionselement (26), welches im Bereich eines Schwenkgelenks zwischen der Rückenlehne (10) und dem Sitzteil (8) angeordnet ist und eine energieverzehrende Veränderung der Neigung der Rückenlehne (10) gegenüber dem Sitzteil (8) bewirkt,
**dadurch gekennzeichnet, dass**
das Energieabsorptionselement (26) mindestens zwei um eine Schwenkachse (44) des Schwenkgelenks in Bezug zueinander verdrehbare Teile (34, 36) mit gegeneinander angepressten Oberflächen mit einem hohen Reibungskoeffizienten aufweist.

2. Fahrzeugsitz nach Anspruch 1,
**dadurch gekennzeichnet, dass**
die verdrehbaren Teile (34, 36) Reibscheiben sind.

3. Fahrzeugsitz nach Anspruch 2,
**dadurch gekennzeichnet, dass**
auf einer der beiden Reibscheiben (34, 36) ein Belag (46) angeordnet ist, der mit der jeweils gegenüberliegenden Fläche der Reibscheiben (34, 36) einen hohen Reibungskoeffizienten ausbildet.

4. Fahrzeugsitz nach Anspruch 1 bis 3,
**dadurch gekennzeichnet, dass**
das Energieabsorptionselement (26) Anschlageinrichtungen (48, 52) aufweist, die eine Neigungsänderung der Rückenlehne (10) über einen vorgegebenen Wert hinaus verhindern.

5. Fahrzeugsitz nach Anspruch 1,
**dadurch gekennzeichnet, dass**
mindestens ein weiteres Energieabsorptionselement (28, 30) zwischen einer Halterung (16) der Kopfstütze (12) und einem Lehnenrahmen (38) der Rückenlehne (10) angeordnet ist und eine energieverzehrende Relativbewegung der Kopfstützenhalterung (16) in Bezug zum Lehnenrahmen (38) in einer Richtung quer zur Halterung (16) bewirkt, wenn eine quer zur Halterung (16) auf die Kopfstütze (12) einwirkende Kraftkomponente (P2) einen vorgegebenen Wert übersteigt.

6. Fahrzeugsitz nach Anspruch 1 oder 1 und 5,
**gekennzeichnet durch**
mindestens ein weiteres in der Kopfstütze (12) oder in der Rückenlehne (10) angeordnetes Energieabsorptionselement (24), das eine energieverzehrende Relativbewegung der Kopfstütze (12) in Bezug zu einer Kopfstützenhalterung (16) und/oder der Kopfstützenhalterung (16) in Bezug zur Rückenlehne (10) in Längsrichtung der Halterung (16) bewirkt, wenn eine in Längsrichtung der Halterung (16) auf die Kopfstütze (10) einwirkende Kraftkomponente (P1) einen vorgegebenen Wert übersteigt.

7. Fahrzeugsitz nach 5,
**dadurch gekennzeichnet, dass**
mindestens eines der weiteren Energieabsorptionselemente (28, 30), die zwischen der Halterung (16) der Kopfstütze (12) und dem Lehnenrahmen (38) der Rückenlehne (10) angeordnet ist Teil einer Höhenverstellvorrichtung der Kopfstütze (12) ist.

8. Fahrzeugsitz nach 1 oder 1 und 5 oder 1 und 6,
**dadurch gekennzeichnet, dass**
mindestens ein weiteres Energieabsorptionselement (32) im Bereich einer Sitzhalterung (4) angeordnet ist und eine energieverzehrende Relativbewegung des Sitzteils (4) in Bezug zum Boden (6) bewirkt, wenn eine entgegen der Richtung der Aufprallkraft auf das Sitzteil (8), die Rückenlehne (10) und/oder die Kopfstütze (12) einwirkende Kraftkomponente (P2) einen vorgegebenen Wert übersteigt.

9. Fahrzeugsitz nach Anspruch 8,
**dadurch gekennzeichnet, dass**
die Relativbewegung weiter ein Absenken des vorderen Endes des Sitzteils (8) oder ein Anheben des hinteren Endes des Sitzteils (8) und damit eine steilere Lehnenneigung bewirkt.

10. Fahrzeugsitz nach einem der Ansprüche 5 bis 9,
**dadurch gekennzeichnet, dass**
sich mindestens eines der Energieabsorptionselemente (24, 28, 30, 32) plastisch verformt, wenn die Kraftkomponente (P1, P2) den vorgegebenen Wert übersteigt.

11. Fahrzeugsitz nach Anspruch 5 bis 10,
**dadurch gekennzeichnet, dass**
das Energieabsorptionselement (24, 28, 30, 32) eine Öffnung (92, 106) aufweist, die durch ein in Bezug zum Energieabsorptionselement (24, 28, 30, 32) bewegliches Spreizelement (14, 100) aufgeweitet wird, wenn die Kraftkomponente (P1, P2) den vorgegebenen Wert übersteigt.

12. Fahrzeugsitz nach Anspruch 11,
**dadurch gekennzeichnet, dass**
das Spreizelement von einer Rundstange (14) der Kopfstützenhalterung (16) gebildet wird, und dass die Öffnungsweite der Öffnung (92) kleiner als der Durchmesser der Rundstange (14) ist.

13. Fahrzeugsitz nach Anspruch 11,
**dadurch gekennzeichnet, dass**
das Spreizelement (14) von einem Stirnende einer Rundstange (14) der Kopfstützenhalterung (16) gebildet wird, und dass sich die Öffnung in Längsrichtung der Halterung (16) erstreckt und von einem das Stirnende umgebenden Rohr (60) umschlossen wird, das sich im Anschluss an das Stirnende verjüngt.

14. Fahrzeugsitz nach Anspruch 11,
**dadurch gekennzeichnet, dass**
das Spreizelement von einem mittleren Teil einer Rundstange (14) der Kopfstützenhalterung (16) gebildet wird, und dass sich die Öffnung (92) quer zur Längsrichtung der Halterung (16) erstreckt und von zwei Rändern (80) begrenzt wird, deren Abstand kleiner als der Durchmesser der Rundstange (14) ist.

15. Fahrzeugsitz nach Anspruch 11,
**dadurch gekennzeichnet, dass**
das Spreizelement von einem verjüngten Dorn gebildet wird, der quer zur Längsrichtung der Halterung in eine Öffnung einer Platte eindringt.

16. Fahrzeugsitz nach Anspruch 11,
**dadurch gekennzeichnet, dass**
das Spreizelement von mindestens einer Befestigungsschraube (100) der Sitzhalterung (4) gebildet wird, die ein erweitertes Ende einer Schlitzöffnung (106) der Halterung (4) durchsetzt.

17. Fahrzeugsitz nach Anspruch 7,
**dadurch gekennzeichnet, dass**
die Höhenverstellvorrichtung der Kopfstütze (12) bei einem Aufprall des Kopfs eines Fahrzeuginsassen auf die Kopfstütze (12) durch eine quer zur Längsrichtung einer Kopfstützenhalterung (16) auf die Kopfstütze (12) einwirkende Kraftkomponente (P2) blockiert wird, bevor sich die Kopfstütze (12) infolge einer in Längsrichtung der Kopfstützenhalterung (16) einwirkende Kraftkomponente (P1) nach unten verschieben kann.

18. Kraftfahrzeug mit einem Fahrzeugsitz nach Anspruch 1 bis 17.

## Claims

1. Vehicle seat (2) with a seat part (8), a backrest (10) and a head restraint (12) connected to the backrest (10), which components, in the event of an impact on the rear of the vehicle, can be displaced inelastically to a limited extent, with energy being absorbed, counter to the direction of the impact force exerted on the vehicle when, as a consequence of the inertia of a vehicle occupant sitting on the vehicle seat (2), forces (P1, P2) which exceed predetermined values are exerted on the head restraint (12), the backrest (10) and/or seat part (8), with an energy absorption element (26) being arranged in the region of a pivot joint between the backrest (10) and the seat part (8) and bringing about an energy-consuming change in the inclination of the backrest (10) in relation to the seat part (8),
**characterized in that**
the energy absorption element (26) has at least two parts (34, 36) which are rotatable with respect to each other about a pivot axis (44) of the pivoting joint and have surfaces which are pressed against each other and have a high coefficient of friction.

2. Vehicle seat according to Claim 1,
**characterized in that**
the rotatable parts (34, 36) are friction discs.

3. Vehicle seat according to Claim 2,
**characterized in that**
a covering (46) is arranged on one of the two friction discs (34, 36) and forms a high coefficient of friction with the respectively opposite surface of the friction discs (34, 36).

4. Vehicle seat according to Claims 1 to 3,
**characterized in that**
the energy absorption element (26) has stop devices (48, 52) which prevent a change in the inclination of the backrest (10) beyond a predetermined value.

5. Vehicle seat according to Claim 1,
**characterized in that**
at least one further energy absorption element (28, 30) is arranged between a holder (16) of the head restraint (12) and a backrest frame (28) of the backrest (10) and brings about an energy-consuming relative movement of the head restraint holder (16) with respect to the backrest frame (38) in a direction transversely to the holder (16) when a force component (P2) which acts on the head restraint (12) transversely with respect to the holder (16) exceeds a predetermined value.

6. Vehicle seat according to Claim 1 or 1 and 5,
**characterized by**
at least one further energy absorption element (24) which is arranged in the head restraint (12) or in the backrest (12) and brings about an energy-consuming relative movement of the head restraint (12) with respect to a head restraint holder (16), and/or of the head restraint holder (16) with respect to the backrest (10) in the longitudinal direction of the holder (16) when a force component (P1) which acts on the head restraint (12) in the longitudinal direction of the holder (16) exceeds a predetermined value.

7. Vehicle seat according to Claim 5,
**characterized in that**
at least one of the further energy absorption elements (28, 30) which is arranged between the holder (16) of the head restraint (12) and the backrest frame (38) of the backrest (10) is part of a height-adjusting device of the head restraint (12).

8. Vehicle seat according to Claim 1 or 1 and 5 or 1 and 6,
**characterized in that**
at least one further energy absorption element (32) is arranged in the region of a seat holder (4) and brings about an energy-consuming relative movement of the seat part (8) with respect to the floor (6) when a force component (P2) which acts on the seat part (8), the backrest (10) and/or the head restraint (12) counter to the direction of the impact force exceeds a predetermined value.

9. Vehicle seat according to Claim 8,
**characterized in that**
the relative movement furthermore brings about a lowering of the front end of the seat part (8) or a raising of the rear end of the seat part (8) and therefore a steeper inclination of the backrest.

10. Vehicle seat according to one of Claims 5 to 9,
**characterized in that**
at least one of the energy absorption elements (24, 28, 30, 32) is deformed plastically when the force component (P1, P2) exceeds the predetermined value.

11. Vehicle seat according to Claims 5 to 10,
**characterized in that**
the energy absorption element (24, 28, 30, 32) has an opening (92, 106) which is expanded by an expansion element (14, 100) which is movable with respect to the energy absorption element (24, 28, 30, 32) when the force component (P1, P2) exceeds the predetermined value.

12. Vehicle seat according to Claim 11,
**characterized in that**
the expansion element is formed by a round rod (14) of the head restraint holder (16), and **in that** the opening width of the opening (92) is smaller than the diameter of the round rod (14).

13. Vehicle seat according to Claim 11,
**characterized in that**
the expansion element (14) is formed by a front end of a round rod (14) of the head restraint holder (16), and **in that** the opening extends in the longitudinal direction of the holder (16) and is enclosed by a tube (60) which surrounds the front end and tapers after the front end.

14. Vehicle seat according to Claim 11,
**characterized in that**
the expansion element is formed by a central part of a round rod (14) of the head restraint holder (16), and **in that** the opening (92) extends transversely with respect to the longitudinal direction of the holder (16) and is bounded by two edges (80), the distance between which is smaller than the diameter of the round rod (14).

15. Vehicle seat according to Claim 11,
**characterized in that**
the expansion element is formed by a tapered spike which penetrates an opening of a plate transversely with respect to the longitudinal direction of the holder.

16. Vehicle seat according to Claim 11,
**characterized in that**
the expansion element is formed by at least one fastening screw (100) of the seat holder (4) that passes through an expanded end of a slot opening (106) of the holder (4).

17. Vehicle seat according to Claim 7,
**characterized in that**,
when the head of a vehicle occupant strikes against the head restraint (12), the height adjustment device of the head restraint (12) is blocked by a force component (P2) which acts on the head restraint (12) transversely with respect to the longitudinal direction of a head restraint holder (16), before the head restraint (12) can be displaced downwards as a consequence of a force component (P1) acting in the longitudinal direction of the head restraint holder (16).

18. Motor vehicle with a vehicle seat according to Claims 1 to 17.

## Revendications

1. Siège de véhicule (2) comprenant une partie d'assise (8), un dossier (10) et un appui-tête (12) connecté au dossier (10), lesquels peuvent être déplacés dans une mesure limitée en cas de collision à l'arrière du véhicule par absorption d'énergie, de manière non élastique à l'encontre de la direction de la force de collision exercée sur le véhicule, lorsque, du fait de l'inertie d'un occupant du véhicule assis sur le siège de véhicule (2), des forces (P1, P2) s'exercent sur l'appui-tête (12), le dossier (10) et/ou la partie d'assise (8), et dépassent les valeurs prédéfinies, un élément d'absorption d'énergie (26) étant disposé dans la région d'une articulation pivotante entre le dossier (10) et la partie d'assise (8) et provoquant une variation, consommant de l'énergie, de l'inclinaison du dossier (10) par rapport à la partie d'assise (8),
**caractérisé en ce que**
l'élément d'absorption d'énergie (26) présente au moins deux parties (34, 36) pouvant tourner l'une par rapport à l'autre autour d'un axe de pivotement (44) de l'articulation pivotante, avec des surfaces pressées l'une contre l'autre ayant un coefficient de frottement élevé.

2. Siège de véhicule selon la revendication 1,
**caractérisé en ce que**
les parties (34, 36) pouvant tourner sont des disques de friction.

3. Siège de véhicule selon la revendication 2,
**caractérisé en ce que**
l'on dispose sur l'un des deux disques de friction (34, 36) un revêtement (46) qui produit avec la face respective opposée des disques de friction (34, 36) un coefficient de frottement élevé.

4. Siège de véhicule selon l'une quelconque des revendications 1 à 3,
**caractérisé en ce que**
l'élément d'absorption d'énergie (26) présente des dispositifs de butée (48, 52) qui empêchent une variation de l'inclinaison du dossier (10) au-delà d'une valeur prédéfinie.

5. Siège de véhicule selon la revendication 1,
**caractérisé en ce que**
au moins un autre élément d'absorption d'énergie (28, 30) est disposé entre une fixation (16) de l'appui-tête (12) et un cadre de dossier (38) du dossier (10) et provoque un mouvement relatif consommant de l'énergie de la fixation de l'appui-tête (16) par rapport au cadre de dossier (38) dans une direction transversale à la fixation (16), lorsqu'une composante de force (P2) agissant transversalement à la fixation (16) sur l'appui-tête (12) dépasse une valeur prédéfinie.

6. Siège de véhicule selon la revendication 1 ou selon les revendications 1 et 5,
**caractérisé par**
au moins un autre élément d'absorption d'énergie (24) disposé dans l'appui-tête (12) ou dans le dossier (10), qui provoque un mouvement relatif consommant de l'énergie de l'appui-tête (12) par rapport à une fixation de l'appui-tête (16) et/ou de la fixation de l'appui-tête (16) par rapport au dossier (10) dans la direction longitudinale de la fixation (16), lorsqu'une composante de force (P1) agissant dans la direction longitudinale de la fixation (16) sur l'appui-tête (12) dépasse une valeur prédéfinie.

7. Siège de véhicule selon la revendication 5,
**caractérisé en ce que**
au moins l'un des autres éléments d'absorption d'énergie (28, 30) qui est disposé entre la fixation (16) de l'appui-tête (12) et le cadre de dossier (38) du dossier (10) fait partie d'un dispositif de réglage en hauteur de l'appui-tête (12).

8. Siège de véhicule selon la revendication 1, ou selon les revendications 1 et 5 ou 1 et 6,
**caractérisé en ce que**
au moins un autre élément d'absorption d'énergie (32) est disposé dans la région d'une fixation de siège (4) et provoque un mouvement relatif consommant de l'énergie de la partie d'assise (8) par rapport au sol (6) lorsqu'une composante de force (P2) agissant à l'encontre de la direction de la force de collision sur la partie d'assise (8), le dossier (10) et/ou l'appui-tête (12) dépasse une valeur prédéfinie.

9. Siège de véhicule selon la revendication 8,
**caractérisé en ce que**
le mouvement relatif provoque en outre un abaissement de l'extrémité avant de la partie d'assise (8) ou un soulèvement de l'extrémité arrière de la partie d' assise (8) et donc une plus forte inclinaison du dossier.

10. Siège de véhicule selon l'une quelconque des revendications 5 à 9,
**caractérisé en ce que**
au moins l'un des éléments d'absorption d'énergie (24, 28, 30, 32) se déforme plastiquement lorsque la composante de force (P1, P2) dépasse la valeur prédéfinie.

11. Siège de véhicule selon l'une quelconque des revendications 5 à 10,
**caractérisé en ce que**
l'élément d'absorption d'énergie (24, 28, 30, 32) présente une ouverture (92, 106), qui est élargie par un élément d'écartement (14, 100) déplaçable par rapport à l'élément d'absorption d'énergie (24, 28, 30, 32), lorsque la composante de force (P1, P2) dépasse la valeur prédéfinie.

12. Siège de véhicule selon la revendication 11,
**caractérisé en ce que**
l'élément d'écartement est formé par une barre ronde (14) de la fixation de l'appui-tête (16) et **en ce que** la largeur d'ouverture de l'ouverture (92) est inférieure au diamètre de la barre ronde (14).

13. Siège de véhicule selon la revendication 11,
**caractérisé en ce que**
l'élément d'écartement (14) est formé par une extrémité frontale d'une barre ronde (14) de la fixation de l'appui-tête (16), et **en ce que** l'ouverture s'étend dans la direction longitudinale de la fixation (16) et est entourée par un tube (60) entourant l'extrémité frontale et qui se rétrécit dans le prolongement de l'extrémité frontale.

14. Siège de véhicule selon la revendication 11,
**caractérisé en ce que**
l'élément d'écartement est formé par une partie centrale d'une barre ronde (14) de la fixation de l'appui-tête (16), et **en ce que** l'ouverture (92) s'étend transversalement à la direction longitudinale de la fixation (16) et est limitée par deux bords (80) dont l'espacement est inférieur au diamètre de la barre ronde (14).

15. Siège de véhicule selon la revendication 11,
**caractérisé en ce que**
l'élément d'écartement est formé par un mandrin rétréci qui pénètre transversalement à la direction longitudinale de la fixation dans une ouverture d'une plaque.

16. Siège de véhicule selon la revendication 11,
**caractérisé en ce que**
l'élément d'écartement est formé par au moins une vis de fixation (100) de la fixation de siège (4), qui traverse une extrémité élargie d'une ouverture en forme de fente (106) de la fixation (4).

17. Siège de véhicule selon la revendication 7,
**caractérisé en ce que**
le dispositif de réglage en hauteur de l'appui-tête (12), en cas de collision de la tête d'un occupant du véhicule avec l'appui-tête (12), est bloqué par une composante de force (P2) agissant transversalement à la direction longitudinale d'une fixation de l'appui-tête (16) sur l'appui-tête (12), avant que l'appui-tête (12) ne puisse se déplacer vers le bas sous l'effet d'une composante de force (P1) agissant dans la direction longitudinale de la fixation de l'appui-tête (16).

18. Véhicule automobile muni d'un siège de véhicule selon l'une quelconque des revendications 1 à 17.
